**Europäisches Patentamt**

**European Patent Office**

**Office européen des brevets**

(19)

(11) Numéro de publication : **0 325 536 B1**

(12)

# FASCICULE DE BREVET EUROPEEN

(45) Date de publication du fascicule du brevet :
03.06.92 Bulletin 92/23

(51) Int. Cl.⁵ : **B01D 53/26**

(21) Numéro de dépôt : **89400153.6**

(22) Date de dépôt : **19.01.89**

(54) **Installation de dessiccation de gaz.**

(30) Priorité : **21.01.88 FR 8800644**

(43) Date de publication de la demande :
**26.07.89 Bulletin 89/30**

(45) Mention de la délivrance du brevet :
**03.06.92 Bulletin 92/23**

(84) Etats contractants désignés :
**AT BE CH DE ES FR GB GR IT LI LU NL SE**

(56) Documents cités :
**FR-A- 1 524 313**
**GB-A- 1 400 255**
**GB-A- 2 053 020**

(73) Titulaire : **Trepaud, Pierre**
**17, rue Legendre**
**F-75 017 Paris (FR)**

(72) Inventeur : **Trepaud, Pierre**
**17, rue Legendre**
**F-75 017 Paris (FR)**

(74) Mandataire : **Bourgognon, Jean-Marie et al**
**Cabinet Flechner 22, Avenue de Friedland**
**F-75008 Paris (FR)**

## Description

L'invention concerne des installations de dessiccation de gaz, notamment d'air comprimé.

L'air ambiant contient de la vapeur d'eau qui reste sous forme gazeuse, tant que sa pression partielle est inférieure à la pression de saturation, cette dernière n'étant fonction que de la température. Dans les installations industrielles, il est souvent nécessaire de disposer d'air comprimé ou non, dont la teneur en vapeur d'eau soit faible. A cet effet, l'air est traité dans une installation de dessiccation, ou sécheur d'air, en mettant l'air riche en vapeur d'eau en contact avec un produit adsorbant qui a la propriété de retenir l'eau.

A cet effet, le produit adsorbant, qui est par exemple un gel de silice ou d'alumine, ou encore un charbon activé, est disposé dans un adsorbeur à travers lequel circule l'air à dessécher. Lors de son trajet à l'intérieur du récipient, l'air perd la vapeur d'eau qu'il contient au fur et à mesure que celle-ci se fixe sur le produit adsorbant sans réagir chimiquement avec lui.

Au fur et à mesure que de l'air à dessécher traverse l'adsorbeur, le produit adsorbant se charge en eau et se sature, d'abord dans la zone d'entrée de l'air, puis, cette zone de saturation se déplace de proche en proche vers l'endroit de la sortie de l'air.

Après qu'un certain volume d'air a été traité, le produit adsorbant doit être régénéré, c'est-à-dire qu'il doit être soumis à un traitement pour éliminer l'eau qu'il a emmagasinée. Ce traitement peut être réalisé suivant divers procédés et l'un d'entre eux consiste à chauffer le produit adsorbant à une température telle que sa capacité d'adsorption devient pratiquement nulle, de sorte que l'eau quitte le produit adsorbant. Il suffit alors de faire circuler un fluide gazeux constituant un courant de régénération pour enlever l'eau qui n'est plus retenue par le produit adsorbant.

Pour mettre en oeuvre un tel procédé de régénération dans une installation industrielle qui fournit de l'air comprimé à une teneur déterminée d'eau par volume unitaire, il faut prévoir deux adsorbeurs identiques contenant un produit adsorbant, reliés par des conduits à l'entrée et à la sortie de l'installation, de manière à fonctionner alternativement en dessiccation de l'air comprimé ou en régénération du produit adsorbant, ainsi que des moyens de chauffage du produit adsorbant.

Les sécheurs à adsorption actuels, mettent en oeuvre deux procédés distincts de régénération du produit adsorbant, qui diffèrent par le fluide gazeux utilisé comme courant de régénération pour enlever l'eau du produit adsorbant. (cf. Techniques de l'ingénieur/Mécanique et chaleur, B. 4230, 8.1985).

Le premier de ces procédés utilise comme fluide gazeux de régénération, de l'air prélevé sur le réseau d'air comprimé, à la sortie de l'adsorbeur servant à la dessiccation. Les moyens de chauffage utilisés sont alors en général des résistances électriques placées dans les adsorbeurs. L'air comprimé prélevé est donc de l'air sec, et on a par conséquent intérêt à en prélever la plus petite portion possible.

Le second procédé utilise, en tant que fluide gazeux de régénération, de l'air ambiant. L'utilisation d'air ambiant, donc humide, pour régénérer le dessiccant, est permise par le fait qu'à haute température, le dessiccant n'absorbe pas l'eau. Toutefois, les points de rosée ainsi obtenus ne sont pas très bas. Les sécheurs, mettant en oeuvre ce procédé, utilisent un ventilateur qui propulse de l'air ambiant dans l'adsorbeur contenant le produit adsorbant à régénérer. Les moyens de chauffage utilisés sont en général placés en aval du ventilateur et servent aussi bien pour les deux adsorbeurs.

Avant de pouvoir utiliser le produit adsorbant régénéré, il est nécessaire, dans ces deux procédés, de le refroidir. Pour le premier procédé, il suffit d'arrêter les moyens de chauffage et de maintenir une circulation d'air comprimé sec, toujours prélevé à la sortie de l'installation de dessiccation ; par contre, pour le second procédé, il est nécessaire de n'utiliser, pendant le refroidissement du produit adsorbant, que de l'air sec ; et celui-ci est en général prélevé à la sortie de l'installation de dessiccation, ceci afin de ne pas apporter d'humidité sur le produit adsorbant régénéré. Il est possible également d'utiliser un courant d'air ambiant pour refroidir à la condition de le faire circuler dans le même sens que celui suivi par l'air à dessécher, pour ne pas charger en eau la face de sortie du dessiccant.

Les installations mettant en oeuvre le premier procédé ci-dessus, ne permettent d'utiliser que des débits de courant de régénération relativement faibles, si l'on ne veut pas prélever une quantité trop importante d'air comprimé sec à la sortie de l'installation. Le procédé utilisant un ventilateur permet, quant à lui, des débits assez élevés, par contre il nécessite une énergie beaucoup plus importante car il fait porter à la température maximum, la totalité du dessiccant.

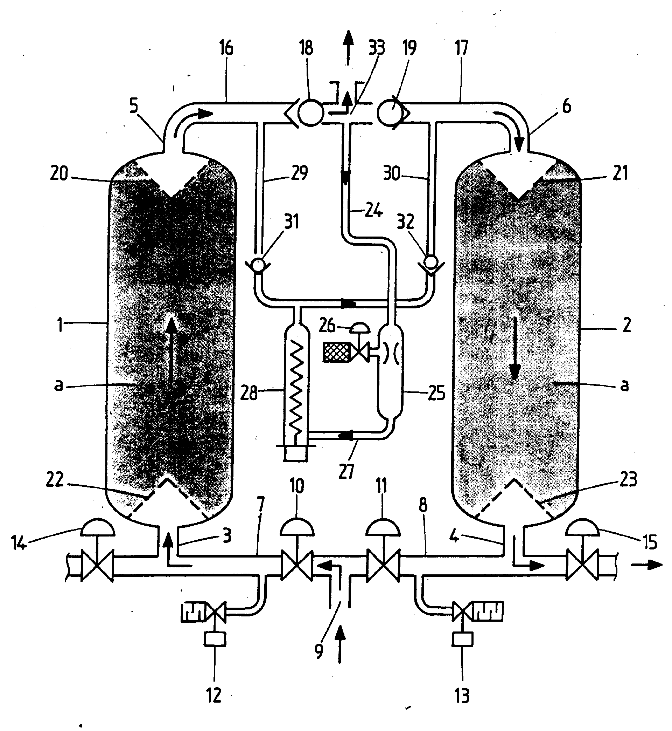

Au FR-B 1.524.313, on décrit une installation du type défini au préambule de la revendication principale. On propose, outre un mode de réalisation par aspiration par un éjecteur de moindre intérêt, un mode de réalisation (figure 1), dans lequel un éjecteur refoule un mélange d'air ambiant et d'air comprimé. On peut ainsi envoyer à l'adsorbeur à régénérer, pour une même consommation de gaz sous pression, un mélange gazeux dont la masse calorifique est suffisante pour transporter à l'adsorbeur la quantité de chaleur nécessaire à la régénération, sans avoir à porter ce mélange gazeux à une température trop élevée préjudiciable au maintien de la qualité de l'adsorbant. Mais pour faire passer l'installation du stade de chauffage de l'adsorbant à régénérer au stade de refroidissement de celui-ci, il faut manoeuvrer trois vannes (9, 12 et 14 à la figure 1), dont l'une à quatre voies est compliquée et d'autant moins fiable qu'elle est soumise en fonctionnement simultanément aux températures très différentes du gaz desséché produit et du mélange gazeux chauffé de régénération.

L'invention pallie ces inconvénients par une installation qui, tout en conservant les avantages de faible consommation et de faibles niveaux de températures du gaz sec pour la régénération, ne nécessite plus, pour passer du stade de chauffage à celui de refroidissement, que la manoeuvre d'une seule vanne, d'ailleurs à simple voie et dans laquelle passe toujours seulement du gaz à la température ambiante. La fiabilité de l'installation est meilleure, sa conduite est simplifiée et, bien que moins compliquée et moins coûteuse à fabriquer, elle permet de régler le rapport de l'air humide au gaz sec dans le mélange refoulé et de prendre sans difficulté les mesures propres à abaisser, si nécessaire, le point de rosée du mélange de régénération.

L'installation suivant l'invention est caractérisée par les dispositions mentionnées à la partie caractérisante de la revendication 1.

L'utilisation d'un éjecteur permet, dès lors qu'il s'agit d'une machine statique, une excellente fiabilité pour ce qui concerne la régénération, et le fait de prélever le fluide-moteur de l'éjecteur à la sortie de l'installation, c'est-à-dire d'utiliser de l'air comprimé sec, permet, lors du refroidissement du produit adsorbant, d'effectuer un balayage d'air sec, tout simplement en obturant l'admission d'air ambiant de l'éjecteur.

A titre d'exemple, l'invention sera décrite ci-dessous à l'aide de la figure annexée qui montre une coupe longitudinale simplifiée d'un sécheur à adsorption pour un fluide gazeux.

Cette installation de séchage de l'air comprend deux adsorbeurs identiques 1 et 2 qui ont la forme de cylindres de révolution à section transversale circulaire. Chacun de ces cylindres est fermé à ses extrémités par des calottes semi-sphériques et est, par exemple, disposé verticalement. Des ouvertures inférieures 3 et 4 sont reliées par des tuyaux 7 et 8 à l'entrée de l'air comprimé à sécher 9. Entre chacune de ces ouvertures 3 et 4 et l'entrée d'air comprimé, se trouvent sur chaque tuyau 7 et 8 une vanne 10 et respectivement 11, ces deux vannes servant à sélectionner l'adsorbeur dans lequel doit être séché l'air comprimé. Chacun des tuyaux 7 et 8 comporte une vanne 12, respectivement 13, servant à décompresser chacun des adsorbeurs, ainsi qu'une vanne 14, respectivement 15, d'écoulement d'air lors de la régénération.

Des ouvertures supérieures 5 et 6, protégées par des grilles 20 et 21 pour éviter l'écoulement du produit adsorbant a, contenu dans chaque adsorbeur, sont reliées par des tuyaux 16, respectivement 17, à la sortie de l'installation évacuant l'air comprimé sec. Chacun de ces tuyaux est muni d'un clapet anti-retour 18, respectivement 19 interdisant le passage dans le sens opposé à celui allant vers la sortie 33. Afin d'éviter l'écoulement du produit adsorbant par les ouvertures inférieures 3 et 4, celles-ci sont protégées par des grilles 22, respectivement 23.

Du point commun où se rejoignent les tuyaux 5 et 6 de la sortie 33 d'air comprimé sec, part un autre tuyau 24 relié par son extrémité à l'admission destinée au fluide moteur d'un éjecteur 25, dont l'aspiration d'air ambiant est commandée par une vanne 26 et dont la sortie de refoulement du mélange air comprimé-air ambiant est reliée à un tuyau 27 qui rejoint un dispositif de chauffage 28 qui est disposé à l'extérieur des adsorbeurs 1, 2, et dont la sortie est reliée d'une part au tuyau 16 par un tuyau 29, et d'autre part au tuyau 17 par un tuyau 30. Les tuyaux 29 et 30 sont munis de clapets anti-retour 31 et 32 interdisant le passage dans le sens allant des tuyaux 16, 17 vers le tuyau 27. Les clapets anti-retour 18, 19 sont interposés entre le point où débouche le tuyau 24 et celui où débouchent les tuyaux 29, 30 respectivement dans les tuyaux 16, 17.

Le fonctionnement est le suivant. L'air comprimé entre par l'entrée 9 et ressort desséché, par la sortie 33. Dans l'installation, telle qu'elle est représentée à la figure, l'adsorbeur 1 fonctionne en dessicateur de l'air comprimé, et l'adsorbeur 2 en régénérateur du produit adsorbant.

En cette position, la vanne 10 est ouverte et la vanne 11 fermée, de manière à ce que l'air comprimé traverse le produit adsorbant contenu dans l'adsorbeur 1, dans le sens ascendant, et ressorte séché par le tuyau 16. L'adsorbeur 2 est en régénération. Dans un premier temps, on effectue la dépressurisation de l'adsorbeur 2 en ouvrant la vanne 13, ce qui a pour conséquence de fermer les clapets anti-retour 19 et 31.

Une fois la dépressurisation terminée, ou ouvre la vanne 15 pour permettre une sortie d'air d'un débit plus important pendant cette phase de régénération et l'on ferme la vanne de dépressurisation 13.

Dans un deuxième temps, on ouvre la vanne 26 de façon à ce que l'éjecteur 25 aspire une quantité d'air ambiant en utilisant la détente du gaz comprimé. Le mélange d'air est ainsi envoyé dans l'adsorbeur 2, comme le montrent les flèches à la figure, et traverse dans le sens descendant le produit adsorbant qu'il contient avant d'être évacué vers l'extérieur par la vanne 15.

Dans un troisième temps, et presque immédiatement, on met en route le dispositif de chauffage 28, de façon que le courant de régénération apporte une quantité de chaleur suffisante au produit adsorbant pour que celui-ci restitue l'eau qu'il a emmagasinée.

Dans un quatrième temps, on ferme la vanne 26 ; il ne subsiste alors qu'une circulation d'air comprimé sec, et on réduit la puissance du dispositif de chauffage, de façon à régénérer l'adsorbeur 2 avec de l'air chaud parfaitement sec, pour parfaire le séchage du produit adsorbant contenu dans la partie supérieure.

Dans un cinquième temps, on arrête le dispositif de chauffage 28 ; l'air comprimé qui circule alors dans l'adsorbeur 2 est froid et assure ainsi le refroidissement du produit adsorbant.

Dans un sixième temps, on ferme la vanne 15 afin de repressuriser l'adsorbeur 2, et une fois cette pressurisation terminée, on ouvre la vanne 11, tout en laissant la vanne 10 ouverte, afin de faire circuler en parallèle dans les deux adsorbeurs 1 et 2 l'air comprimé à sécher et terminer ainsi, si nécessaire, le refroidissement du produit adsorbant contenu dans l'adsorbeur 2, l'air éventuellement chaud étant ainsi mélangé avec l'air froid sortant de l'adsorbeur 1.

Et enfin, on ferme la vanne 10 pour placer l'adsorbeur 1 en régénération et pour que l'adsorbeur 2 serve à sécher l'air comprimé entrant dans l'installation.

La régénération du produit adsorbant contenu dans l'adsorbeur 1 s'effectue d'une manière analogue à celle précédemment décrite pour l'adsorbeur 2.

Le procédé reste le même si l'on inverse les sens de circulation sur les récipients contenant le dessiccant. C'est-à-dire séchage dans le sens descendant et balayage pour la régénération dans le sens ascendant.

L'air comprimé sec passant par le conduit 24 représente, en général, de 2 à 6% en volume du débit sortant par le conduit 5.

**Revendications**

1. Installation de dessiccation de gaz, comprenant deux adsorbeurs (1, 2) montés en parallèle par des tuyaux d'entrée (7, 8) et de sortie (16, 17) entre une entrée (9) et une sortie (33), un éjecteur (25) ayant une admission (24), une aspiration et un refoulement (27) avec dispositif de chauffage (28), et des moyens (29, 30, 31, 32) pour mettre l'un (17) seulement, au choix, des tuyaux de sortie en communication avec le refoulement (27), caractérisée par des moyens (18, 19) mettant l'admission (24) en communication seulement avec l'autre (16) des tuyaux de sortie et par une vanne (26) montée sur l'aspiration.

2. Installation suivant la revendication 1, caractérisée en ce que les moyens mettant l'admission (24) en communication seulement avec l'autre (16) des tuyaux de sortie comprennent deux clapets anti-retour (18, 19) montés sur les tuyaux de sortie (16, 17) de manière à interdire tout passage dans le sens de l'admission (24) vers les tuyaux de sortie (16, 17).

3. Installation suivant la revendication 1 ou 2, caractérisée en ce que les moyens pour mettre l'un (17) seulement, au choix, des tuyaux de sortie en communication avec le refoulement (27) comprennent deux clapets anti-retour (31, 32) montés sur des tuyaux (29, 30) de mise en communication du refoulement (27) avec les tuyaux de sortie (16, 17), de manière à interdire tout passage dans le sens des tuyaux de sortie (16, 17) vers le refoulement (27).

4. Installation suivant la revendication 2 ou 3, caractérisée en ce que les deux dits moyens ne comprennent, comme organes d'arrêt du passage, que des clapets anti-retour.

**Patentansprüche**

1. Vorrichtung zum Trocknen von Gas, mit zwei Adsorbern (1, 2), die durch Einlaßleitungen (7, 8) und Auslaßleitungen (16, 17) in Parallelschaltung zwischen einem Einlaß (9) und einem Auslaß (33) angeordnet sind, mit einem Ejektor (25), der einen Einlaßanschluß, (24) einen Ansauganschluß und einen mit einem Heizer (28) verbundenen Auslaßanschluß (27) aufweist, und mit Mitteln (29, 30, 31, 32), durch welche wahlweise eine einzige der Auslaßleitungen (17) mit der Auslaßanschluß (27) verbindbar ist, gekennzeichnet durch Mittel (18, 19) durch welche der Ansauganschluß (24) nur mit der anderen (16) der Auslaßleitungen verbindbar ist, und durch ein Ventil (26), das am Ansauganschluß angebracht ist.

2. Vorrichtung nach Anspruch 1, dadurch gekennzeichnet, daß die Mittel, durch welche der Einlaßanschluß (24) nur mit der anderen (16) der Auslaßleitung verbindbar ist, zwei Rückschlagventil (18, 19) umfassen, die in den Auslaßleitungen (16, 17) so angeordnet sind, daß sie jegliches Strömen von Medium in derjenigen Richtung verhindern, die von dem Einlaßanschluß (24) zu den Auslaßleitungen (16, 17) führt.

3. Vorrichtung nach Anspruch 1 oder 2, dadurch gekennzeichnet, daß die Mittel, die dazu dienen, wahlweise nur eine (17) der Auslaßleitungen mit dem Auslaßanschluß (27) zu verbinden, zwei Rückschlagventile (31, 32) aufweisen, die in denjenigen Leitungen (29, 30) angeordnet sind, über welche der Auslaßanschluß (27) mit den Auslaßleitungen (16, 17) verbunden ist, das Ganze derart, daß jegliche Strömung in derjenigen Richtung verhindert wird, die von den Auslaßleitungen (16, 17) zum Auslaßanschluß (27) führt.

4. Vorrichtung nach Anspruch 2 oder 3, dadurch gekennzeichnet, daß die genannten beiden Mittel als die Strömungsverbindung unterbrechende Organe nur Rückschlagventile umfassen.

**Claims**

1. Apparatus for drying gas comprising two adsorbers (1, 2) mounted in parallel between an entrance (9) and an exit (33) by inlet conduits (7, 8) and exit conduits (16, 17); a jet pump (25) having an inlet (24), suction means and delivery means (27) with heating means (28), and means (29, 30, 31, 32) for selectively putting only one (17) of the exit conduits in communication with the delivery means (27), characterised by means (18, 19) for putting the inlet (24) in communication only with the other exit conduit (16); and by a valve (26) mounted on the suction means.

2. Apparatus according to claim 1, characterised in that the means for putting the inlet (24) in communication only with the other (16) of the exit conduits comprise two non-return valves (18, 19) mounted on the exit conduits (16, 17) so as to prevent any passage in the direction from the inlet (24) towards the exit conduits (16, 17).

3. Apparatus according to claim 1 or 2, characterised in that the means for putting only one (16) of the exit conduits selectively in communication with the delivery means (27) comprise two non-return valves (31, 32) mounted on conduits (29, 30) for connecting the delivery means (27) with the exit conduits (16, 17), so as to prevent any passage in the direction from the exit conduits (16, 17) towards the delivery means (27).

4. Apparatus according to claim 2 or 3, characterised in that the two said means comprise, as means for obstructing the flow, only non-return valves.